# EUROPEAN PATENT SPECIFICATION

(11) **EP 4 645 794 B1**
(45) Date of publication and mention of the grant of the patent: **03.06.2026**
(21) Application number: 24305689.2
(22) Date of filing: 30.04.2024
(51) Int. Cl.: H04L 41/0806, H04L 41/082, H04L 41/085

(54) **METHOD AND SYSTEM FOR SETTING A CONFIGURATION ONTO A NETWORKING DEVICE**
VERFAHREN UND SYSTEM ZUM EINSTELLEN EINER KONFIGURATION AUF EINER VERNETZUNGSVORRICHTUNG
PROCÉDÉ ET SYSTÈME POUR ÉTABLIR UNE CONFIGURATION SUR UN DISPOSITIF DE RÉSEAUTAGE

(43) Date of publication of application: 05.11.2025
(73) Proprietor: OVH, 59100 Roubaix (FR)
(72) Inventor: BEDOUET, Olivier Jacques Henri, 26120 Malissard (FR)
(74) Representative: BCF Global

(56) References cited:
- EP-A2- 1 276 275
- US-A1- 2019 007 555
- US-B1- 7 290 164
- WATSEN JUNIPER NETWORKS J CLARKE CISCO SYSTEMS M ABRAHAMSSON T-SYSTEMS K: "Zero Touch Provisioning for NETCONF Call Home; draft-ietf-netconf-zerotouch-04.txt", ZERO TOUCH PROVISIONING FOR NETCONF CALL HOME; DRAFT-IETF-NETCONF-ZEROTOUCH-04.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 19 October 2015 (2015-10-19), pages 1 - 52, XP015109261

## Description

### FIELD

The present technology relates to networking and more particularly to setting a configuration onto a networking device.

### BACKGROUND

Networking devices that are part of a network, ie: nodes of such network, need configuration management at different stages of their life cycle: first time boot, upgrades, crashes, running configuration updates through robots, reboots, etc. This configuration management process implies different processes at each of these stages, involving a startup configuration, and a running configuration.

Typically, the startup configuration is a file stored on a flash memory of the networking device, while the running configuration is a real time-built object from processes in Random Access Memory (RAM). The reasons for not writing the running configuration, and its constant and frequent modifications, in the flash memory, revolve mainly around the slower write time of the flash memory, and the endurance of flash memories to read/write cycles.

One of the resulting effects of that breakdown in memory type usage, is that, in case of a reboot, the running configuration is "lost", and the state of the networking device, and the configuration management stage, go "back" to that of startup configuration. This may further lead to the networking device running in an unknown/incomplete configuration, and loss of configuration synchronicity between the actual configuration, and the configuration expected by the rest of the network.

A solution may consist in remotely running periodical checks of networking device status by comparing its running configuration with a reference configuration. Reconciliation of the two may for example be attempted by existing automation tools such as Network Services Orchestrator (NSO) from Cisco^{™}. However, although detecting differences between configurations may be easy, resolution of the differences can prove quite challenging, and may require human intervention to apply corrections to the running configuration. US Patent 7,290,164, entitled "METHOD OF REVERTING TO A RECOVERY CONFIGURATION IN RESPONSE TO DEVICE FAULTS" and published 30 October 2007, describes a method for reverting to a recovery configuration in response to device faults. The device may change its current configuration to a new configuration based upon configuration instructions. If a loss of connectivity resulting from the configuration change is detected, the device will recover from the loss of connectivity by reverting to a recovery configuration. Document (WATSEN JUNIPER NETWORKS J CLARKE CISCO SYSTEMS M ABRAHAMSSON T-SYSTEMS K: "Zero Touch Provisioning for NETCONF Call Home", IETF, 19 October 2015) discloses a bootstrapping process, whereby, when a device being in a factory default state is initially powered on, the device reads bootstrapping information comprising an URI specifying a file server from a DHCP server, loads boot image and configuration settings from the file server, and places the image and the configuration settings in a USB flash drive of the device.

Even though the developments identified above may provide benefits, improvements are still desirable.

### SUMMARY

Implementations of the present technology have been developed at least in part based on developers' appreciation of shortcomings associated with the prior art. Developers of the present technology have devised generally a method and system to provide each networking device in the network with the autonomy to fetch the complete running configuration at each reboot, and to manage running configuration task updates, while keeping the startup configuration of the initial boot (and any firmware upgrades obtained at reboot as the case may be). The invention is more specifically as defined in the appended claims.

In the context of the present specification, a "server" is a computer program that is running on appropriate hardware and is capable of receiving requests (e.g., from administrator devices) over a network, and carrying out those requests, or causing those requests to be carried out. The hardware may be one physical computer or one physical computer system, but neither is required to be the case with respect to the present technology. In the present context, the use of the expression a "server" is not intended to mean that every task (e.g., received instructions or requests) or any particular task will have been received, carried out, or caused to be carried out, by the same server (i.e., the same software and/or hardware); it is intended to mean that any number of software elements or hardware devices may be involved in receiving/sending, carrying out or causing to be carried out any task or request, or the consequences of any task or request; and all of this software and hardware may be one server or multiple servers, both of which are included within the expression "at least one server".

In the context of the present specification, "user device" is any computer hardware that is capable of running software appropriate to the relevant task at hand. Thus, some (non-limiting) examples of user devices include personal computers (desktops, laptops, notebooks, etc.), smartphones, and tablets, etc. It should be noted that a device acting as a user device in the present context is not precluded from acting as a server to other user devices. The use of the expression "a user device" does not preclude multiple user devices being used in receiving/sending, carrying out or causing to be carried out any task or request, or the consequences of any task or request, or steps of any method described herein.

In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers.

In the context of the present specification, the expression "dataset" includes information of any nature or kind whatsoever capable of being stored in a database. Thus information includes, but is not limited to audiovisual works (images, movies, sound records, presentations etc.), data (location data, numerical data, etc.), text (opinions, comments, questions, messages, etc.), documents, spreadsheets, lists of words, etc.

In the context of the present specification, the expression "component" is meant to include software (appropriate to a particular hardware context) that is both necessary and sufficient to achieve the specific function(s) being referenced.

In the context of the present specification, the expression "computer usable information storage medium" is intended to include media of any nature and kind whatsoever, including RAM, ROM, disks (CD-ROMs, DVDs, floppy disks, hard drivers, etc.), USB keys, solid state-drives, tape drives, etc.

In the context of the present specification, a "network" is intended to include a configuration of devices and software that are in mutual communication and can exchange information, including data and instructions. Such communication is accomplished by the presence of a direct physical connection between devices (i.e., wired communication) and/or indirectly by electromagnetic or other non-physically connected communication (i.e., wireless communication), using whatever protocols are existing between the two devices. A network can include arbitrary numbers and types of devices, systems, and applications, which, in some exemplary, illustrative, non-limiting embodiments, function in accordance with established policies. In some networks, the networking devices, systems and applications comprised in the network can change over time, as can their configurations, locations and other parameters as networking devices are connected or disconnected from the network whether purposely or inadvertently.

In the context of the present specification, unless expressly provided otherwise, an "indication" of an information element may be the information element itself or a pointer, reference, link, or other indirect mechanism enabling the recipient of the indication to locate a network, memory, database, or other computer-readable medium location from which the information element may be retrieved. For example, an indication of a document could include the document itself (i.e. its contents), or it could be a unique document descriptor identifying a data object with respect to a particular object storage device, or some other means of directing the recipient of the indication to a network location, memory address, database table, or other location where the data object may be accessed. As one skilled in the art would recognize, the degree of precision required in such an indication depends on the extent of any prior understanding about the interpretation to be given to information being exchanged as between the sender and the recipient of the indication. For example, if it is understood prior to a communication between a sender and a recipient that an indication of an information element will take the form of a database key for an entry in a particular table of a predetermined database containing the information element, then the sending of the database key is all that is required to effectively convey the information element to the recipient, even though the information element itself was not transmitted as between the sender and the recipient of the indication.

In the context of the present specification, the words "first", "second", "third", etc. have been used as adjectives only for the purpose of allowing for distinction between the nouns that they modify from one another, and not for the purpose of describing any particular relationship between those nouns. Thus, for example, it should be understood that, the use of the terms "first server" and "third server" is not intended to imply any particular order, type, chronology, hierarchy or ranking (for example) of/between the server, nor is their use (by itself) intended imply that any "second server" must necessarily exist in any given situation. Further, as is discussed herein in other contexts, reference to a "first" element and a "second" element does not preclude the two elements from being the same actual real-world element. Thus, for example, in some instances, a "first" server and a "second" server may be the same software and/or hardware, in other cases they may be different software and/or hardware.

Implementations of the present technology each have at least one of the above-mentioned objects and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 is a schematic diagram of a network comprising networking devices, a configuration automation tool and other configuration-related servers in accordance with implementations of the present technology;
Figure 2 is a flow diagram of a method for setting a configuration onto a networking device in accordance with implementations of the present technology; and
Figure 3 is a block diagram of a processing unit in accordance with an implementation of the present technology.

It should also be noted that, unless otherwise explicitly specified herein, the drawings may not be drawn to scale.

### DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements that, although not explicitly described or shown herein, nonetheless embody the principles of the present technology.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes that may be substantially represented in non-transitory computer-readable media and so executed by a computer or processor, whether or not such computer or processor is explicitly shown.

The functions of the various elements shown in the figures, including any functional block labeled as a "processor" or "processing unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some implementations of the present technology, the processor may be a general-purpose processor, such as a Central Processing Unit (CPU) or a processor dedicated to a specific purpose, such as a Digital Signal Processor (DSP). Moreover, explicit use of the term a "processor" should not be construed to refer exclusively to hardware capable of executing software, and may implicitly include, without limitation, Application Specific Integrated Circuit (ASIC), Field Programmable Gate Array (FPGA), flash memory, Read-Only Memory (ROM) for storing software, Random Access Memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities.

It is to be expressly understood that the figures merely depict illustrative implementations of the present technology. Thus, the description thereof that follows is intended to be only a description of illustrative examples of the present technology. In some cases, what are believed to be helpful examples of modifications to the present technology may also be set forth below. This is done merely as an aid to understanding, and, again, not to define the scope or set forth the bounds of the present technology. These modifications are not an exhaustive list, and, as a person skilled in the art would understand, other modifications are likely possible. Further, where this has not been done (i.e., where no examples of modifications have been set forth), it should not be interpreted that no modifications are possible and/or that what is described is the sole manner of implementing that element of the present technology. As a person skilled in the art would understand, this is likely not the case. In addition, it is to be understood that the present disclosure may provide in certain instances simple implementations of the present technology, and that where such is the case they have been presented in this manner as an aid to understanding. As persons skilled in the art would understand, various implementations of the present technology may be of a greater complexity.

With these fundamentals in place, we will now consider some non-limiting examples to illustrate various implementations of aspects of the present technology.

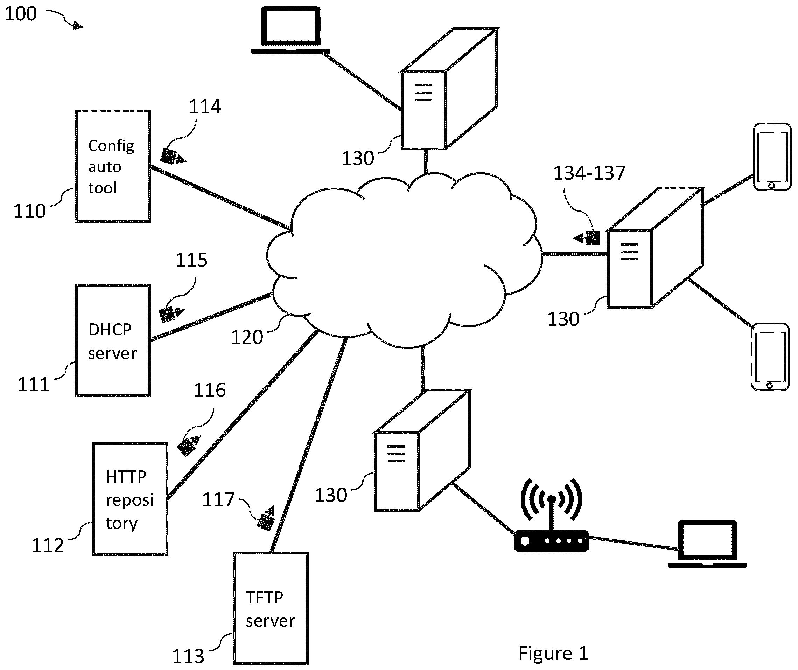

Referring to Figure 1, there is shown a schematic diagram of a System 100, the System 100 being suitable for implementing non-limiting embodiments of the present technology. The System 100 comprises inter alia a Configuration automation tool 110, a DHCP server 111, a HTTP repository 112, a TFTP server 113, a Communication network 120, and a plurality of Networking devices 130.

Networking devices may be equipment such as switches, routers, gateways, or the like, that are designed to provide services of communication between user devices. As such, any variation of System 100 configured to enable networking device configuration automation can be adapted to execute embodiments of the present technology, once teachings presented herein are appreciated. In the context of the present disclosure, the Networking devices 130 are interconnected via the Communication network 120 and form a deployed network, each Networking device 130 having a respective current status and configuration.

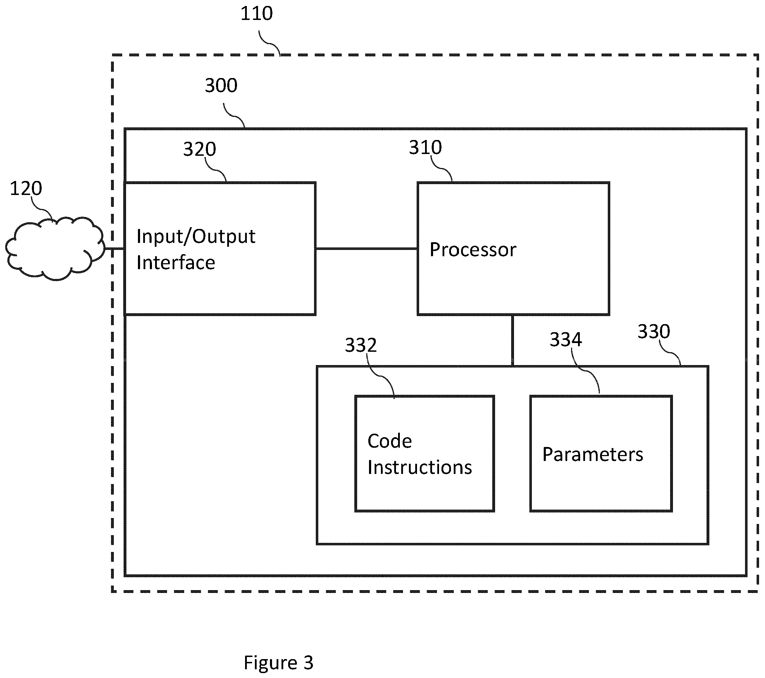

For example, in a non-limiting embodiment, elements of the System 100 may physically belong to an Infrastructure provider (not shown) and be used to provide one or more services to one or more corresponding clients of the Infrastructure provider. The Networking devices 130, the Configuration automation tool 110, the DHCP server 111, the HTTP repository 112, and the TFTP server 113, may be managed, controlled and/or operated by the Infrastructure provider, or its client(s), or third parties. The Configuration automation tool 110, the DHCP server 111, the HTTP repository 112, and the TFTP server 113, may be communicably connected to a Network administration device (not shown; see below) that may be under control of a corresponding administrator of the Infrastructure provider, the client, or the third party. The functionalities of the Configuration automation tool 110 may be provided by a processing unit 300 (see Figure 3).

### Communication network

In one non-limiting example, the Communication network 120 is a managed and controlled network designed to provide services of communication. It is not, for example, the internet. In non-limiting examples, the Communication network 120 or portions thereof may be implemented as wide-area communication network, local-area communication network, private communication network, a fabric in a datacenter, or the like.

The purpose of the Communication network 120 is to communicatively couple at least some of the components of the System 100 such as the plurality of Networking devices 130 and the Configuration automation tool 110, the DHCP server 111, the HTTP repository 112, and the TFTP server 113. For example, this means that the Configuration automation tool 110, the DHCP server 111, the HTTP repository 112, and the TFTP server 113 are accessible via the Communication network 120 by the plurality of Networking devices 130.

The Communication network 120 may be used in order to transmit data packets amongst the plurality of Networking devices 130 and the Configuration automation tool 110, the DHCP server 111, the HTTP repository 112, and the TFTP server 113. For example, the Communication network 120 may be used to transmit, from a given one or more of the Networking devices 130, configuration requests and status to the Configuration automation tool 110, and/or receive information about configuration and/or configuration tasks (ie: updates to the configuration).

Generally speaking, a Networking device 130 may issue, as seen Figure 1, requests 134-137, that are responded to, respectively, by the Configuration automation tool 110 (response 114), the DHCP server 111 (response 115), the HTTP repository 112 (response 116), and the TFTP server 113 (response 117).

The Configuration automation tool 110, as well as the DHCP server 111, the HTTP repository 112, and the TFTP server 113 may for example be implemented in a server, or a cluster of servers. As such, functionalities of the Configuration automation tool 110, the DHCP server 111, the HTTP repository 112, and the TFTP server 113 may be distributed on multiple servers. In an example of an embodiment of the present technology, a given one of the servers of the cluster of servers may be implemented as a Dell^{™} PowerEdge^{™} server running the Microsoft^{™} Windows Server^{™} operating system. The Configuration automation tool 110, the DHCP server 111, the HTTP repository 112, and the TFTP server 113 may be implemented in any other suitable hardware and/or software and/or firmware or a combination thereof.

### DHCP server 111

The DHCP server 111 may receive requests 135 from the Networking device 130, within the frame of, for example, a Zero Touch Provisioning (ZTP) process, or a One Touch Provisioning (OTP) process, and send responses 115 to the Networking device 130. ZTP for example is a provisioning mechanism which allows unconfigured networking devices to automatically load deployment files upon boot/power-on, including system software, patch and initial configuration files, and thus realize an efficient initial configuration of networking devices. Upon boot/powering on, the Networking device 130 with ZTP capability executes a boot file that configures the device's initial configuration parameters, and enables the Networking device 130 to for example request, and obtain, an IP address, the location of a TFTP server, the gateway address, and/or the domain name, etc. from the DHCP server 111. The Networking device 130 uses this information to connect to a file server or cloud service where it retrieves further configuration information or software, etc.

### HTTP repository 112

HTTP repository 112 is a file server that may receive requests 136 from the Networking device 130, and send responses 116 to the Networking device 130. For example, HTTP repository 112 may provide upon request:
- a verification process of the firmware version of the Networking device 130, followed by a download of the firmware update as the case may be; and
- instruction files that the Networking device 130 may download, extract instructions from, and execute such instructions.

### TFTP server 113

TFTP server 113 is a file server that may receive requests 137 from the Networking device 130, and send responses 117 to the Networking device 130. For example, TFTP server 113 may provide upon request a startup configuration for the Networking device 130. As will be appreciated by the person skilled in the art, the startup configuration refers generally to a set of static information such as management IP address, links with other networking devices, log and security management, etc. as the initial configuration of the Networking device 130.

The descriptions above for the DHCP server 111, the HTTP repository 112, and the TFTP server 113, are of non-limiting implementations that are known to the person skilled in the art, of specific functionalities. It will be apparent that the functionalities may be realized through other technical means, still within the scope of the present technology.

### Configuration automation tool 110

Configuration automation tool 110 is a file server that may receive requests 134 from the Networking device 130, and send responses 114 to the Networking device 130. For example, Configuration automation tool 110 may provide upon request a running configuration to the Networking device 130. As will be appreciated by the person skilled in the art, the running configuration refers generally to a set of dynamic information that is the current version of the configuration file the Networking device 130 runs on: this file contains all changes and updates made to the configuration, for example to fix vulnerabilities or improve performance. In contrast, changes are not made to the startup configuration. At every reboot, the running configuration, stored in RAM, is lost and all changes erased.

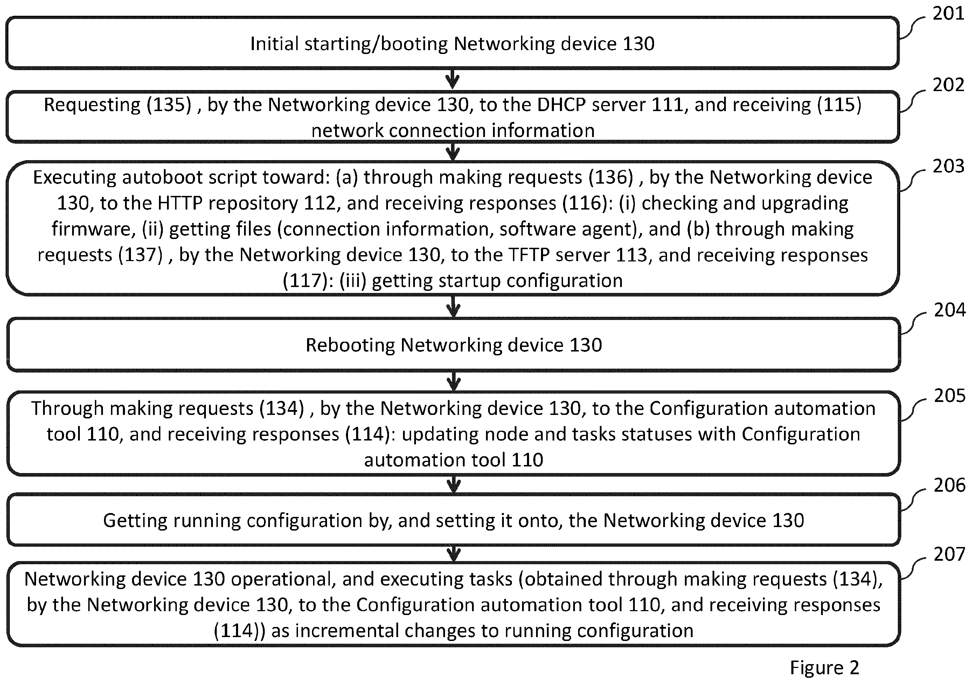

More specifically, as seen Figure 2, the method in accordance with the present technology, involves the following steps:
- step 201: initial start/boot of the Networking device 130 being deployed in the System 100.
- step 202: the Networking device 130 may initiate, for example through a ZTP process: making a request 135 from the DHCP server 111 and receiving a response 115 from the DHCP server 111, information of connection to the network (IP address, DNS, etc.), allowing in particular to connect to the HTTP repository 112, as per step 203 below.
- step 203: the Networking device 130 may execute an autoboot script to:
   - through making requests 136 to the HTTP repository 112, and receiving responses 116:
      - checking and upgrading its firmware, as the case may be;
      - getting files comprising in particular information allowing it to connect to the Configuration automation tool 110, and a software agent allowing it to execute the steps 205-207 below;
   - through making requests 137 to the TFTP server 113, and receiving responses 117:
      - get its startup configuration.
- step 204: reboot of the Networking device 130.
Through making requests 134 to the Configuration automation tool 110, and receiving responses 114:
- step 205: the Networking device 130 may update with the Configuration automation tool 110 its node status (ex: "active"), and tasks status (ex: "performed"), a task being defined as an incremental change to the running configuration.
- step 206: the Networking device 130 may obtain its running configuration, and such running configuration be set onto the Networking device 130.
- step 207: the now operational Networking device 130 may execute any such (non-performed) tasks received from the Configuration automation tool 110, as incremental changes to the running configuration.

While the above-described implementations have been described and shown with reference to particular steps performed in a particular order, it will be understood that these steps may be combined, sub-divided, or re-ordered without departing from the teachings of the present technology. At least some of the steps may be executed in parallel or in series. Accordingly, the order and grouping of the steps is not a limitation of the present technology.

It will be appreciated by the person skilled in the art, in relation to step 203 above:
- upgraded firmware as the case may be, as well as the files, software agent, and startup configuration, are stored in a flash memory of the Networking device 130;
- any "out of the box" Networking device 130 will automatically be rebooted (step 204) with the proper level of firmware;
- means other than a HTTP repository could be used, such as any other file server with no required authentication.

It will be appreciated by the person skilled in the art, in relation to step 205 above, that optionally:
- other information may be obtained by the Networking device 130, such as a firmware update, and/or any of its internal parameters that the Networking device 130 may update;
- the Networking device 130 may pass on to the Configuration automation tool 110, information such as its model, its software version, etc.

It will be appreciated by the person skilled in the art, in relation to steps 201 to 203 above, that other means and techniques may be devised to obtain an identical result obtained at the end of step 203, ie: that its startup configuration may be set onto the Networking device 130. In other words, it is essential to the present technology that the Networking device 130 be equipped with its startup configuration prior to step 204, regardless of the means and techniques used to arrive at that result.

It will be appreciated by the person skilled in the art, in relation to steps 205 to 207 above, that the software agent uploaded on Networking device 130 may be configured to obtain in particular the running configuration and the tasks to be executed, from multiple instances of Configuration automation tool 110, each instance providing a complementary portion of such running configuration and tasks. Such an optional design allows to mutualize sources of configuration information between two or more instances of Configuration automation tool 110.

It will be appreciated by the person skilled in the art, in relation to step 207 above, that the Networking device 130 is operational as soon as its running configuration has been set onto it (step 206), and that the steps of executing non-performed tasks are not essential to reaching the operational status in the present technology.

Thus, at step 205, and at each subsequent reboot, the Networking device 130 obtains from the Configuration automation tool 110, its full, complete and current running configuration, that is therefore at any time synchronized with the configuration of the Networking device 130 expected in the System 100. Such running configuration may thus be set onto the Networking device 130 in its RAM.

In known technologies, a centralized system "pushes" running configurations onto networking devices in sequence, such that if one networking device is in error or unreachable, the whole configuration process is halted or stalled. In the present technology to the contrary, each and every Networking device 130 in the System 100 manages itself to obtain its running configuration and tasks from a centralized system (the Configuration automation tool 110). If one Networking device 130 is down, this does not prevent other Networking devices 130 from operating properly and the System 100 to reach a high level of operation.

In the present technology also, there is no need any more for making backups of the running configuration of Networking devices 130, a technique otherwise widely used in the industry currently.

### Network administration device (not shown)

As indicated above, the Configuration automation tool 110, the DHCP server 111, the HTTP repository 112, and the TFTP server 113, may be communicably connected to a Network administration device. The Network administration device may for example be a network orchestrator, for example of the type OpenStack^{™}. As appreciated by the person skilled in the art, the Network administration device may develop, maintain and pass on to the Configuration automation tool 110, the DHCP server 111, the HTTP repository 112, and the TFTP server 113, information related to an expected network configuration for System 100. For example, the expected network configuration may comprise expected status of given Networking devices 130, expected status of communication links between given Networking devices 130 or the like (ie: configurations for different layers of the Open Systems Interconnection (OSI) model for Networking devices 130).

To that effect, the Network administration device may implement a virtual architecture of the System 100, whereby instantiation objects and classes are defined for each Networking device 130 to cover all information required to deploy and describe a network configuration. More specifically, each Networking device 130 may be represented as a set of instantiation objects in an object model, or "network model", maintained by the Network administration device, the network model being thus indicative of a network configuration of the deployed network. As such, upon instantiating a given Networking device 130, the Network administration device may generate one or more new instantiation objects or update information of existing instantiation objects representative of characteristics of the given Networking device 130 in the network model.

In a non-limiting embodiment, and as described in European patent No. EP3703314 published on September 2nd, 2020, four instantiation object types may be modelled in the network model:
- a Node object representing a point of interconnection in the network (e.g. a server, a router, or the like);
- an Interface object, being hierarchically inferior to the Node object, and representing a connection to a point of interconnection;
- an evpnEdge object representing the transport to/from of a point of interconnection in the network; and
- a Layer object, being hierarchically inferior to the evpnEdge object, and representing the characteristics of a transported protocol to/from a point of interconnection.

Each instantiation object of the network model may be instantiated with a specific set of configuration commands indicative of the expected configuration status of the Networking device 130 that they model. In a non-limiting embodiment, a given Layer object may be instantiated such that a Layer 2 protocol is the transported protocol, and a given Layer object instantiated such that a Layer 3 protocol is the transported protocol. For example, a transported Layer 2 protocol may be any Ethernet-based protocol (e.g. IEEE 802.1q header), and a transported Layer 3 protocol may be the IPv4 protocol or the IPv6 protocol.

Further, the interface provided by the Configuration automation tool 110 for exchanges of requests 134 and responses 114, may be a REST API as also described in aforementioned European patent No. EP3703314.

As appreciated by the person skilled in the art, other means may be devised in such a Network administration device to develop, maintain and pass on to the Configuration automation tool 110, the DHCP server 111, the HTTP repository 112, and the TFTP server 113, information related to an expected network configuration for System 100. Any such means must allow instant conversion of a network model, into a running configuration and tasks, that the Networking device 130 may be able to obtain on-demand from the Configuration automation tool 110.

In such an environment, the format of the request 134 as well as the response 114 may be a json format, fully described, as will be appreciated by the person skilled in the art, in European patent No. EP4152723 published on March 22, 2023.

As an example, Figure 3 is a schematic block diagram of a processing unit 300 that may provide the functionalities of the Configuration automation tool 110 according to an embodiment of the present technology. The processing unit 300 comprises a processor or a plurality of cooperating processors (represented as a processor 310 for simplicity), a memory device or a plurality of memory devices (represented as a memory device 330 for simplicity), and a input/output interface 320 allowing the processing unit 300 to, in paerticular, communicate with the Communication network 120, the plurality of Networking devices 130 communicably connected thereto, and any Network administration device (not shown). The processor 310 is operatively connected to the memory device 330 and to the input/output interface 320. The memory device 330 includes a storage for storing including parameters 334, including for example and without limitation the running configuration of Networking devices 130. The memory device 330 may comprise a computer-readable medium for storing code instructions 332 that are executable by the processor 310 to allow the processing unit 300 to perform the various tasks allocated to the Configuration automation tool 110 in the method illustrated Figure 2. For example, the software agent allowing Configuration automation tool 110 to execute steps 205-207 (Figure 2) may reside in code instructions 332.

The processing unit 300 may therefore be operatively connected, via the input/output interface 320, to the Communication network 120, the plurality of Networking devices 130, and any Network administration device (not shown). The processing unit 300 executes the code instructions 332 stored in the memory device 330 to implement the various above-described functions that may be present in a particular embodiment. Figure 3 as illustrated represents a non-limiting embodiment in which the processing unit 300 orchestrates operations of the Configuration automation tool 110. This particular embodiment is not meant to limit the present disclosure and is provided for illustration purposes.

The foregoing description is intended to be exemplary rather than limiting. The scope of the present technology is therefore intended to be limited solely by the scope of the appended claims.

## Claims

1. A method for setting a configuration onto a Networking device (130) connected to a network (120), comprising:
- upon an initial boot of the Networking device (130):
- establishing, by the Networking device (130), a communicable link with a DHCP server (111) in the network (120);
- requesting (135), by the Networking device (130), a network connection information, comprising the location of a file server in the network (120);
- receiving (115), from the DHCP server (111), the requested network connection information;
- establishing, by the Networking device (130), using the received network connection information, a communicable link with a HTTP repository (112) in the network (120);
- requesting (136), by the Networking device (130), and receiving (116) from the HTTP repository (112) a firmware upgrade if available, and a software agent;
- upgrading by the Networking device (130) of the firmware upon the firmware upgrade being available;
- establishing, by the Networking device (130), using the received network connection information, a communicable link with the file server (113);
- requesting (137), by the Networking device (130), and receiving (117) from the file server (113), a startup configuration; and
- setting (202-203) the startup configuration onto a flash memory of the Networking device (130); and
- upon a reboot subsequent to the initial boot of the Networking device (130), executing by the Networking device (130) the received software agent, comprising:
- establishing, by the Networking device (130), a communicable link with a Configuration automation tool (110) in the network (120);
- requesting (134), by the Networking device (130), a running configuration;
- receiving (114), from the Configuration automation tool (110), the running configuration; and
- setting (205-207) the running configuration onto a Random Access Memory, RAM, of the Networking device (130).

2. The method of claim 1, further comprising, upon a reboot subsequent to the initial boot of the Networking device (130):
- requesting (134), by the Networking device (130), a task to be executed comprising an incremental change to the running configuration;
- receiving (114), from the Configuration automation tool (110), the requested task; and
- executing the received task to update the running configuration with the incremental change onto the Networking device (130).

3. A Networking device (130) configured to, when the Networking device (130) is connected to a network (120):
- upon an initial boot of the Networking device (130):
- establish a communicable link with a DHCP server (111) in the network (120);
- request (135) a network connection information, comprising the location of a file server in the network (120);
- receive (115), from the DHCP server (111), the requested network connection information;
- establish, using the received network connection information, a communicable link with a HTTP repository (112) in the network (120);
- request (136) and receive (116) from the HTTP repository (112) a firmware upgrade if available, and a software agent:
- upgrade the firmware upon the firmware upgrade being available;
- establish, using the received network connection information, a communicable link with the file server (113);
- request (137) and receive (117) from the file server (113), a startup configuration; and
- set (202-203) the startup configuration onto a flash memory of the Networking device (130); and
- upon a reboot subsequent to the initial boot of the Networking device (130), execute the received software agent, comprising:
- establish a communicable link between the Networking device (130) and a Configuration automation tool (110) in the network (120);
- request (134) a running configuration;
- receive (114), from the Configuration automation tool (110), the running configuration; and
- set (205-207) the running configuration onto a Random Access Memory, RAM, of the Networking device (130).

4. The Networking device (130) of claim 3, further configured to, upon a reboot subsequent to the initial boot of the Networking device (130):
- request (134) a task to be executed comprising an incremental change to the running configuration;
- receive (114), from the Configuration automation tool (110), the requested task; and
- execute the received task to update the running configuration with the incremental change onto the Networking device (130).

5. The Networking device (130) of any of the claims 3 to 4, wherein the interface provided by the Configuration automation tool (110) for exchanges of requests (134) and responses (114), is a REST API.

6. The Networking device (130) of any of the claims 3 to 5, wherein the Configuration automation tool (110) is communicably connected to a Network administration device, and wherein at least two Networking devices (130) are connected to the network (120) to form a deployed network, and wherein the Network administration device:
- implements a virtual architecture of the deployed network, whereby instantiation objects and classes are defined for each of the at least two Networking devices (130), to cover all information required to describe a configuration of the deployed network; and
- maintains and passes on to the Configuration automation tool (110), information related to an expected configuration of each of the at least two Networking devices (130), in a format allowing the Configuration automation tool (110) to convert the information into a running configuration for each of the at least two Networking devices (130).

7. A computer-readable medium comprising instructions which, when executed by a processing unit, cause the processing unit to perform the method of any of the claims 1 to 2.

## Patentansprüche

1. Verfahren zum Einstellen einer Konfiguration auf einer Vernetzungsvorrichtung (120), die mit einem Netzwerk (130) verbunden ist, umfassend:
- bei einem ersten Start der Vernetzungsvorrichtung (130):
- Herstellen einer kommunikativen Verbindung mit einem DHCP-Server (111) in dem Netzwerk (120) durch die Vernetzungsvorrichtung (130);
- Anfordern (135) einer Netzwerkverbindungsinformation, umfassend den Standort eines Dateiservers in dem Netzwerk (120) durch die Vernetzungsvorrichtung (130);
- Empfangen (115) der angeforderten Netzwerkverbindungsinformation von dem DHCP-Server (111);
- Herstellen einer kommunikativen Verbindung mit einem HTTP-Repository (112) in dem Netzwerk (120) durch die Vernetzungsvorrichtung (130) mithilfe der empfangenen Netzwerkverbindungsinformation;
- Anfordern (136) und Empfangen (116) eines Firmware-Upgrades, falls verfügbar, und eines Software-Agenten durch die Vernetzungsvorrichtung (130) von dem HTTP-Repository (112);
- Upgraden der Firmware durch die Vernetzungsvorrichtung (130), wenn das Firmware-Upgrade verfügbar ist;
- Herstellen einer kommunikativen Verbindung mit dem Dateiserver (113) durch die Vernetzungsvorrichtung (130) mithilfe der empfangenen Netzwerkverbindungsinformation;
- Anfordern (137) und Empfangen (117) einer Startkonfiguration von dem Dateiserver (113) durch die Vernetzungsvorrichtung (130); und
- Einstellen (202-203) der Startkonfiguration auf einem Flash-Speicher der Vernetzungsvorrichtung (130); und
- bei einem Neustart anschließend an den ersten Start der Vernetzungsvorrichtung (130), Ausführen des empfangenen Software-Agenten durch die Vernetzungsvorrichtung (130), umfassend:
- Herstellen einer kommunikativen Verbindung mit einem Konfigurationsautomatisierungstool (110) in dem Netzwerk (120) durch die Vernetzungsvorrichtung (130);
- Anfordern (134) einer laufenden Konfiguration durch die Vernetzungsvorrichtung (130);
- Empfangen (114) der laufenden Konfiguration von dem Konfigurationsautomatisierungstool (110); und
- Einstellen (205-207) der laufenden Konfiguration auf einem Direktzugriffsspeicher (RAM) der Vernetzungsvorrichtung (130).

2. Verfahren nach Anspruch 1, bei einem Neustart anschließend an den ersten Start der Vernetzungsvorrichtung (130) ferner Folgendes umfassend:
- Anfordern (134), dass eine Aufgabe ausgeführt wird, umfassend eine inkrementelle Änderung der laufenden Konfiguration, durch die Vernetzungsvorrichtung (130);
- Empfangen (114) der angeforderten Aufgabe von dem Konfigurationsautomatisierungstool (110); und
- Ausführen der empfangenen Aufgabe, um die laufende Konfiguration mit der inkrementellen Änderung auf der Vernetzungsvorrichtung (130) zu aktualisieren.

3. Vernetzungsvorrichtung (130), die, wenn die Vernetzungsvorrichtung (130) mit ein Netzwerk (120) verbunden ist, zu Folgendem konfiguriert ist:
- bei einem ersten Start der Vernetzungsvorrichtung (130):
- Herstellen einer kommunikativen Verbindung mit einem DHCP-Server (111) in dem Netzwerk (120);
- Anfordern (135) einer Netzwerkverbindungsinformation, umfassend den Standort eines Dateiservers in dem Netzwerk (120);
- Empfangen (115) der angeforderten Netzwerkverbindungsinformation von dem DHCP-Server (111);
- Herstellen einer kommunikativen Verbindung mit einem HTTP-Repository (112) in dem Netzwerk (120) mithilfe der empfangenen Netzwerkverbindungsinformation;
- Anfordern (136) und Empfangen (116) eines Firmware-Upgrades, falls verfügbar, und eines Software-Agenten von dem HTTP-Repository (112);
- Upgraden der Firmware, wenn das Firmware-Upgrade verfügbar ist;
- Herstellen einer kommunikativen Verbindung mit dem Dateiserver (113) mithilfe der empfangenen Netzwerkverbindungsinformation;
- Anfordern (137) und Empfangen (117) einer Startkonfiguration von dem Dateiserver (113); und
- Einstellen (202-203) der Startkonfiguration auf einem Flash-Speicher der Vernetzungsvorrichtung (130); und
- bei einem Neustart anschließend an den ersten Start der Vernetzungsvorrichtung (130), Ausführen des empfangenen Software-Agenten, umfassend:
- Herstellen einer kommunikativen Verbindung zwischen der Vernetzungsvorrichtung (130) und einem Konfigurationsautomatisierungstool (110) in dem Netzwerk (120);
- Anfordern (134) einer laufenden Konfiguration;
- Empfangen (114) der laufenden Konfiguration von dem Konfigurationsautomatisierungstool (110); und
- Einstellen (205-207) der laufenden Konfiguration auf einem Direktzugriffsspeicher (RAM) der Vernetzungsvorrichtung (130).

4. Vernetzungsvorrichtung (130) nach Anspruch 3, nach einem Neustart anschließend an den ersten Start der Vernetzungsvorrichtung (130) ferner zu Folgendem konfiguriert:
- Anfordern (134), dass eine Aufgabe ausgeführt wird, umfassend eine inkrementelle Änderung der laufenden Konfiguration;
- Empfangen (114) der angeforderten Aufgabe von dem Konfigurationsautomatisierungstool (110); und
- Ausführen der empfangenen Aufgabe, um die laufende Konfiguration mit der inkrementellen Änderung auf der Vernetzungsvorrichtung (130) zu aktualisieren.

5. Vernetzungsvorrichtung (130) nach einem der Ansprüche 3 bis 4, wobei die durch das Konfigurationsautomatisierungstool (110) bereitgestellte Schnittstelle für Austausche von Anforderungen (134) und Antworten (114) eine REST-API ist.

6. Vernetzungsvorrichtung (130) nach einem der Ansprüche 3 bis 5, wobei das Konfigurationsautomatisierungstool (110) kommunikativ mit einer Netzwerkverwaltungsvorrichtung verbunden ist und wobei mindestens zwei Vernetzungsvorrichtungen (130) mit dem Netzwerk (120) verbunden sind, um ein eingesetztes Netzwerk auszubilden, und wobei die Netzwerkverwaltungsvorrichtung:
- eine virtuelle Architektur des eingesetzten Netzwerks implementiert, wobei Instanziierungsobjekte und Klassen für jede der mindestens zwei Vernetzungsvorrichtungen (130) definiert werden, um alle Informationen abzudecken, die erforderlich sind, um eine Konfiguration des eingesetzten Netzwerks zu beschreiben; und
- Informationen verwaltet und an das Konfigurationsautomatisierungstool (110) übermittelt, die eine erwartete Konfiguration jeder der mindestens zwei Vernetzungsvorrichtungen (130) betreffen in einem Format, das es dem Konfigurationsautomatisierungstool (110) ermöglicht, die Informationen in eine laufende Konfiguration für jede der mindestens zwei Vernetzungsvorrichtungen (130) umzuwandeln.

7. Computerlesbares Medium, umfassend Anweisungen, die bei Ausführung durch eine Prozessoreinheit die Prozessoreinheit veranlassen, das Verfahren nach einem der Ansprüche 1 bis 2 durchzuführen.

## Revendications

1. Procédé de mise en place d'une configuration sur un dispositif de mise en réseau (130) connecté à un réseau (120), comprenant :
- lors d'un amorçage initial du dispositif de mise en réseau (130) :
- l'établissement, par le dispositif de mise en réseau (130), d'une liaison de communication avec un serveur DHCP (111) dans le réseau (120) ;
- la demande (135), par le dispositif de mise en réseau (130), d'informations de connexion au réseau, comprenant l'emplacement d'un serveur de fichiers dans le réseau (120) ;
- la réception (115), depuis le serveur DHCP (111), des informations de connexion au réseau demandées ;
- l'établissement, par le dispositif de mise en réseau (130), en utilisant les informations de connexion au réseau reçues, d'une liaison de communication avec un référentiel HTTP (112) dans le réseau (120) ;
- la demande (136), par le dispositif de mise en réseau (130), et la réception (116) depuis le référentiel HTTP (112) d'une mise à niveau de micrologiciel si disponible, et d'un agent logiciel ;
- la mise à niveau par le dispositif de mise en réseau (130) du micrologiciel dès que la mise à niveau de micrologiciel est disponible ;
- l'établissement, par le dispositif de mise en réseau (130), en utilisant les informations de connexion au réseau reçues, d'une liaison de communication avec le serveur de fichiers (113) ;
- la demande (137), par le dispositif de mise en réseau (130), et la réception (117) depuis le serveur de fichiers (113), d'une configuration de démarrage ; et
- la mise en place (202-203) de la configuration de démarrage sur une mémoire flash du dispositif de mise en réseau (130) ; et
- lors d'un réamorçage ultérieur à l'amorçage initial du dispositif de mise en réseau (130), l'exécution par le dispositif de mise en réseau (130) de l'agent logiciel reçu, comprenant :
- l'établissement, par le dispositif de mise en réseau (130), d'une liaison de communication avec un outil d'automatisation de configuration (110) dans le réseau (120) ;
- la demande (134), par le dispositif de mise en réseau (130), d'une configuration en cours d'exécution ;
- la réception (114), depuis l'outil d'automatisation de configuration (110), de la configuration en cours d'exécution ; et
- la mise en place (205-207) de la configuration en cours d'exécution sur une mémoire vive, RAM, du dispositif de mise en réseau (130).

2. Procédé selon la revendication 1, comprenant en outre, lors d'un réamorçage ultérieur à l'amorçage initial du dispositif de mise en réseau (130) :
- la demande (134), par le dispositif de mise en réseau (130), d'une tâche à exécuter comprenant une modification incrémentale de la configuration en cours d'exécution ;
- la réception (114), depuis l'outil d'automatisation de configuration (110), de la tâche demandée ; et
- l'exécution de la tâche reçue pour mettre à jour la configuration en cours d'exécution avec la modification incrémentale sur le dispositif de mise en réseau (130).

3. Dispositif de mise en réseau (130) configuré pour, lorsque le dispositif de mise en réseau (130) est connecté à un réseau (120) :
- lors d'un amorçage initial du dispositif de mise en réseau (130) :
- établir une liaison de communication avec un serveur DHCP (111) dans le réseau (120) ;
- demander (135) des informations de connexion au réseau, comprenant l'emplacement d'un serveur de fichiers dans le réseau (120) ;
- recevoir (115), depuis le serveur DHCP (111), les informations de connexion au réseau demandées ;
- établir, en utilisant les informations de connexion au réseau reçues, une liaison de communication avec un référentiel HTTP (112) dans le réseau (120) ;
- demander (136) et recevoir (116) depuis le référentiel HTTP (112) une mise à niveau de micrologiciel si disponible, et un agent logiciel ;
- mettre à niveau le micrologiciel dès que la mise à niveau de micrologiciel est disponible ;
- établir, en utilisant les informations de connexion au réseau reçues, une liaison de communication avec le serveur de fichiers (113) ;
- demander (137) et recevoir (117) depuis le serveur de fichiers (113), une configuration de démarrage ; et
- mettre en place (202-203) la configuration de démarrage sur une mémoire flash du dispositif de mise en réseau (130) ; et
- lors d'un réamorçage ultérieur à l'amorçage initial du dispositif de mise en réseau (130), exécuter l'agent logiciel reçu, comprenant :
- établir une liaison de communication entre le dispositif de mise en réseau (130) et un outil d'automatisation de configuration (110) dans le réseau (120) ;
- demander (134) une configuration en cours d'exécution ;
- recevoir (114), depuis l'outil d'automatisation de configuration (110), la configuration en cours d'exécution ; et
- mettre en place (205-207) la configuration en cours d'exécution sur une mémoire vive, RAM, du dispositif de mise en réseau (130).

4. Dispositif de mise en réseau (130) selon la revendication 3, configuré en outre pour, lors d'un réamorçage ultérieur à l'amorçage initial du dispositif de mise en réseau (130) :
- demander (134) une tâche à exécuter comprenant une modification incrémentale de la configuration en cours d'exécution ;
- recevoir (114), depuis l'outil d'automatisation de configuration (110), la tâche demandée ; et
- exécuter la tâche reçue pour mettre à jour la configuration en cours d'exécution avec la modification incrémentale sur le dispositif de mise en réseau (130).

5. Dispositif de mise en réseau (130) selon l'une quelconque des revendications 3 et 4, dans lequel l'interface fournie par l'outil d'automatisation de configuration (110) pour des échanges de demandes (134) et de réponses (114) est une API REST.

6. Dispositif de mise en réseau (130) selon l'une quelconque des revendications 3 à 5, dans lequel l'outil d'automatisation de configuration (110) est connecté en communication à un dispositif d'administration de réseau, et dans lequel au moins deux dispositifs de mise en réseau (130) sont connectés au réseau (120) pour former un réseau déployé, et dans lequel le dispositif d'administration de réseau :
- met en œuvre une architecture virtuelle du réseau déployé, moyennant quoi des objets d'instanciation et des classes sont définis pour chacun des au moins deux dispositifs de mise en réseau (130), afin de couvrir toutes les informations nécessaires à la description d'une configuration du réseau déployé ; et
- maintient et transmet à l'outil d'automatisation de configuration (110) des informations relatives à une configuration attendue de chacun des au moins deux dispositifs de mise en réseau (130), dans un format permettant à l'outil d'automatisation de configuration (110) de convertir les informations en une configuration en cours d'exécution pour chacun des au moins deux dispositifs de mise en réseau (130).

7. Support lisible par ordinateur comprenant des instructions qui, lorsqu'elles sont exécutées par une unité de traitement, amènent l'unité de traitement à réaliser le procédé selon l'une quelconque des revendications 1 et 2.
